# FASCICULE DE BREVET EUROPEEN

(11) **EP 1 118 457 B1**
(45) Date de publication et mention de la délivrance du brevet: **17.09.2003**
(21) Numéro de dépôt: 01400066.5
(22) Date de dépôt: 11.01.2001
(51) Int. Cl.: B32B 15/01, B22D 19/00

(54) **Pièce bimétallique en alliage d'aluminium comportant un insert massif en titane ou alliage de titane**
Bimetallisches Werkstuck aus Aluminium-Legieriung mit einem massiven Eisatz aus Titan oder Titan-Legierung
Bimetallic component made from aluminium alloy with a bulk insert of titanium or titanium alloy

(30) Priorité: 13.01.2000 FR 0000394
(43) Date de publication de la demande: 25.07.2001
(73) Titulaire: Valfond Argentan SA, 61200 Argentan (FR)
(72) Inventeur: Barbeau, Fabrice, Valfond Branche Alliages, 61200 Argentan (FR); Paty, France, Valfond Branche Alliages, 61200 Argentan (FR); Loussaut, Jean-Guy, 61160 Aubry en Exmes (FR); Péronnet, Myriam Lab Multimatériaux et Interfaces, 43 bd 11 Nov.1918 69622 Villeurbanne (FR); Viala Jean-Claude Lab Multimatériaux & Interfaces, 43 bd 11 Nov.1918 69622 Villeurbanne (FR); Bosselet Françoise Lab Multimatériaux Interfaces, 43 bd 11 Nov.1918 69622 Villeurbanne (FR)
(74) Mandataire: Coester, Jacques Charles

(56) Documents cités:
- EP-A- 0 384 045
- US-A- 3 359 142
- US-A- 3 409 978
- US-A- 3 615 279
- US-A- 5 377 742
- DATABASE WPI Section Ch, Week 199637 Derwent Publications Ltd., London, GB; Class M22, AN 1996-368656 XP002147449 -& JP 08 176702 A (MITSUBISHI JUKOGYO KK), 9 juillet 1996 (1996-07-09)

## Description

La présente invention concerne des pièces en alliages d'aluminium localement renforcées par des inserts réalisés au moins en partie en titane.

L'allégement des véhicules de transport constitue depuis toujours une préoccupation majeure pour les constructeurs et les fabricants de pièces. En effet, tout gain de poids au niveau des moteurs, de la structure et des équipements peut permettre pour les utilisateurs d'augmenter la capacité de charge, d'avoir de meilleurs performances et de réaliser des économies d'énergie.

Dans ces conditions, le choix des matériaux et des techniques de mise en forme est restreint et c'est surtout dans l'optimisation du dimensionnement des pièces et dans l'art de combiner les matériaux entrant dans leur fabrication que résident les solutions. Tout naturellement, la réflexion a en premier lieu porté sur les pièces métalliques les plus lourdes. Par exemple, en ce qui concerne de nombreuses pièces de moteur (culasse, pistons, bloc...), les métaux ferreux traditionnels de densité élevée (entre 7 et 8) sont progressivement remplacés par des alliages légers à base d'aluminium (densité de l'ordre de 2,7).

Pour les pièces subissant de fortes contraintes locales (thermiques, mécaniques...), un ou plusieurs renforts en métal ferreux ou cuivreux sont déjà couramment placés aux endroits les plus sollicités. Ce type de système bimétallique alliage d'aluminium / alliage de fer ou de cuivre est déjà produit de manière peu onéreuse à l'échelle industrielle en fonderie. Un acquis important existe d'ores et déjà sur ces multimatériaux en ce qui concerne la technologie d'élaboration et le dimensionnement. Les nombreux procédés déjà décrits pour réaliser une liaison métallurgique entre un alliage d'aluminium et un insert en métal ferreux ou cuivreux lors de l'élaboration de la pièce par fonderie sont basés sur le principe qu'il est impératif de revêtir le renfort d'un dépôt qui évite l'oxydation du substrat et qui facilite (pour le fer) ou empêche (pour le cuivre) la mise en contact des deux métaux (Cf. brevet européen 0 384 045 B1).

Tout d'abord, le moulage de ces systèmes bimétalliques est très compliqué en raison de la conductivité thermique élevée du fer (proche de 75Wm⁻¹K⁻¹) et du cuivre (proche de 385Wm⁻¹K⁻¹), qui perturbe fortement les paramètres thermiques du moule. Pour ce dernier métal, il est impératif de le préchauffer à assez haute température avant le moulage en contrôlant finement son oxydation sous peine de formation de nombreux défauts de remplissage qui diminuent notablement les propriétés de la pièce bimétallique. Dans le cas d'un substrat ferreux, en raison de la trop grande quantité de chaleur absorbée par l'alliage de fer, il est impossible de créer une liaison métallurgique entre l'insert simplement décapé et l'alliage de moulage directement à la coulée. Il est dès lors impératif de préchauffer le renfort sans qu'il s'oxyde (sinon la liaison métallurgique ne peut pas se faire) et la température à laquelle se trouve portée l'interface alliage liquide/insert lors du surmoulage ou lors de l'immersion dans un bain d'alliage d'aluminium augmente lentement et décroît rapidement. Or, la durée pendant laquelle l'interface liquide/solide se trouve à la température la plus élevée possible est un des facteurs clé déterminant la qualité de l'interaction insert/alliage de surmoulage. La liaison métallurgique alliage de fer/alliage d'aluminium est difficile à réaliser et surtout à contrôler (problèmes d'oxydation, de thermique du système...), elle n'est pas très satisfaisante car elle est irrégulière, épaisse, hétérogène et très fragile.

Ensuite, pour ces pièces qui subissent de fortes contraintes locales les gains de poids escomptés avec le renforcement de l'alliage d'aluminium par des inserts en métal ferreux ou cuivreux sont relativement faibles, ceci pour différentes raisons. D'abord la masse volumique élevée des alliages à base de fer (entre 7 et 8 kg/dm ) ou de cuivre (proche de 9 kg/dm ) augmente beaucoup la densité moyenne de la pièce. Quelle que soit la nature du substrat (en métal ferreux ou cuivreux), il est impossible d'effectuer un traitement thermique de durcissement structural classique appliqué aux alliages d'aluminium. La liaison métallurgique entre un métal ferreux et l'alliage d'aluminium de surmoulage se détériore lors de ce traitement thermique de durcissement structural du fait de la grande réactivité des métaux en présence. Il se produit en effet une diffusion préférentielle des atomes d'Al qui provoque la formation de pores à l'interface alliage d'aluminium/zone de réaction, pores dont la coalescence conduit à une désolidarisation de l'insert par rapport à l'alliage d'aluminium. Il en résulte un défaut d'étanchéité aux fluides au niveau de cette liaison et l'apparition d'un certain jeu mécanique entre les deux métaux. Lors du traitement thermique de durcissement structural d'une pièce bimétallique en alliage d'aluminium comportant un insert en métal cuivreux, il y a formation de brûlures de trempe qui détériorent de manière importante les propriétés de la pièce. En conclusion, pour les systèmes bimétalliques cités, il est difficile d'obtenir les meilleures propriétés de l'alliage léger et de connaître le niveau de transfert de charge entre l'insert et l'alliage d'aluminium, ce qui entraîne nécessairement d'effectuer un surdimentionnement de la pièce qui augmente sa masse.

Par ailleurs, il est connu d'utiliser des inserts revêtus d'un film de titane. Le brevet français 2 688 154 fait état de l'utilisation de ce métal, mais sous la forme d'un film de 0,5 à 10 um d'épaisseur réalisé par dépôt physique en phase vapeur recouvrant un insert fait d'un autre métal que le titane : métal ferreux, cuivreux ou à base d'aluminium. Les systèmes réalisés selon le procédé décrit dans le brevet 2 688 154 n'ont qu'un intérêt très limité car, hormis le fait qu'il soit plus facile de créer la liaison métallurgique lors du surmoulage (de part la réactivité du titane sur l'air et l'alumine), ils présentent comme les précédents une densité élevée et l'interface n'est pas forcément de bonne qualité. Enfin, le brevet cité ne fait pas état de la possibilité d'effectuer un traitement thermique de durcissement structural de l'alliage d'aluminium de surmoulage car celui-ci est rendu impossible par le fait que les auteurs de l'invention décrite dans le brevet N° 2 688 154 ont déjà rencontré, lors de l'élaboration de leurs pièces, des problèmes de brûlures de trempe (renfort en alliage de cuivre) et de formation de zones de réaction épaisses et fragiles (insert en métal ferreux).

La présente invention concerne la réalisation de pièces bimétalliques qui ne présentent pas les inconvénients précédemment cités. Elle se focalise plus particulièrement sur le renforcement local des alliages d'aluminium par des inserts massifs en titane ou en alliages de titane avec création d'une liaison métallurgique entre ces deux métaux et l'aptitude de ces systèmes bimétalliques à pouvoir subir un traitement thermique de durcissement structural de l'alliage d'aluminium de surmoulage pour obtenir les meilleures propriétés de l'ensemble.

La faible densité des alliages de titane (de l'ordre de 4,5) permet de réaliser un gain de poids maximum. L'insert décapé constitué massivement de ce métal est soit placé directement dans un moule que l'on remplit avec l'alliage de surmoulage, soit pré-aluminé selon le procédé connu sous le nom de "procédé Alfin", ou une des variantes, avant d'être mis en place dans le moule. Quelle que soit la solution mise en oeuvre, la liaison métallurgique s'établit bien plus facilement avec un insert massif en titane ou en alliage de titane selon l'invention, qu'avec des inserts à base de fer, de cuivre ou d'aluminium revêtus ou non selon la technique antérieure. En effet, la conductivité thermique du titane ou de ses alliages (de l'ordre de 18Wm⁻¹K⁻¹) est bien inférieure à celle des autres métaux précités (proche de 75Wm⁻¹K⁻¹ pour le fer, de 385Wm⁻¹K⁻¹ pour le cuivre et de 218 Wm⁻¹K⁻¹ pour l'aluminium). De ce fait, la température à laquelle se trouve portée l'interface alliage liquide / insert lors du surmoulage ou lors de l'immersion dans un bain d'alliage d'aluminium augmente beaucoup plus rapidement et est nettement plus élevée dans le cas d'un insert à base de titane que dans celui d'inserts à base d'autres métaux revêtus ou non de titane (Fe, Cu ou Al). Or, le fait que l'interface liquide / solide se trouve plus rapidement (donc plus longtemps) à la température la plus élevée possible est un des facteurs déterminant l'établissement d'une liaison métallurgique de qualité.

La liaison métallurgique titane ou alliage de titane massif/alliage d'aluminium est beaucoup plus facile à obtenir. Une fois que celle-ci est établie, il est possible d'ajuster les paramètres du procédé de moulage pour maîtriser la réaction à l'interface entre les deux métaux, et d'obtenir une zone de réaction très régulière, peu épaisse et homogène. Une étude réalisée par le Demandeur sur des interfaces modèles a en effet montré que la liaison entre du titane et des alliages d'aluminium (Al faiblement allié, AS7 et AS18) se développe très rapidement et de manière uniforme sur toute la surface des échantillons entre 630 et 730°C. La mesure de l'évolution de cette interface en fonction de la durée du contact entre le métal liquide et le métal du substrat solide a montré, d'une part que lorsque l'alliage d'aluminium n'est pas saturé en Ti la liaison métallurgique entre les deux métaux évolue très peu au cours du temps à 730°C ou à 630°C et que, d'autre part, lorsque le bain d'aluminiage est saturé en titane, la zone de réaction épaissit lentement et uniformément jusqu'à 4 min d'interaction ; au-delà elle se dégrade en raison de l'intervention de phénomènes de fragilisation-recristallisation.

Le moule utilisé peut être non permanent (en sable, en céramique, en plâtre, en ciment...) ou en métal et le moulage effectué par différentes techniques telles que le moulage par gravité ou sous basse pression, le moulage-forgeage (squeeze casting), le moulage sous pression ou par injection, le moulage à l'état semi liquide (thixio moulage).

En ce qui concerne l'alliage de surmoulage, bien que tout alliage d'aluminium convienne (Al, Al-Si, Al-Cu, Al-Mg, Al-Zn, Al-Mn... selon la norme NFA 57-702), on utilise de préférence les alliages de moulage désignés suivant la norme française NF EN573-3 par les références : AS2GT, AM4, AM2N2, AG3, AG5, AG10, AS5U3, AS6U4, AS7U3, AS9U3, AS7G, AS10G, AS11, AS12U, AS12UNG, AS18UNG, AS22UNK, AZ5G et AU5GT, c'est-à-dire que l'alliage de surmoulage appartient préférentiellement aux familles suivantes : AS, ASU, AG, AU, AZ, AM. En ce qui concerne l'alliage de titane constituant l'insert, il appartient préférentiellement aux familles suivantes : TAGV, TA5E, TA8DV, Ti.10.2.3, TA6V6E...

L'insertion en fonderie rend possible de conserver une pièce peu coûteuse en limitant l'emploi du titane (dont le prix au kilo est élevé et la mise en forme onéreuse) aux seules parties qui subissent de fortes contraintes (thermiques, mécaniques...). De plus les alliages de titane apportent à la pièce leurs caractéristiques propres qui sont de très bonnes propriétés mécaniques, leur très faible oxydabilité à chaud, leur excellente compatibilité (métallurgique et électrochimique) avec les alliages d'aluminium et enfin leur caractère de bouclier thermique en rapport avec leur faible conductivité thermique et leur bonne tenue en température contrairement aux inserts en métaux ferreux ou cuivreux.

L'intérêt majeur du renforcement local d'alliages d'aluminium par des inserts massifs en titane ou en alliages de titane est la possibilité d'effectuer un traitement thermique de durcissement structural de l'alliage d'aluminium qui permet d'améliorer ses propriétés, tout en augmentant celles de la zone de réaction interfaciale.

Ce traitement thermique se déroule entre 510 et 540°C pour les alliages d'aluminium de la famille Al-Si ou Al-Cu, entre 480 et 510°C pour les alliages des familles Al-Si-Cu, Al-Cu-Si, Al-Si-Mg et Al-Mg-Si, et entre 370 et 430°C pour les alliages Al-Mg et Al-Zn, soit en général entre 370 et 540°C selon la nature de l'alliage d'aluminium, la taille de la pièce et les caractéristiques du four utilisé. La durée du pallier en température de ce traitement est alors comprise entre 1 et 24 heures (typiquement de 4 à 12h). Pour plus de détail sur les températures et les durées des traitements thermiques de durcissement structural, il est nécessaire de se référer aux normes NF A 02-011 et NF A 57-702. L'étude de l'évolution d'interfaces alliages d'aluminium / insert en titane ou alliage de titane ainsi obtenues lors de traitements thermiques à différentes températures (entre 500 et 535°C) pendant des temps variables (de 0,5h à 48h), a montré que, lorsque la zone de réaction existe initialement, elle épaissit très lentement. Dans le cas où il n'y a pas de liaison métallurgique avant le traitement thermique, cette dernière se développe sur toutes les surfaces où les deux métaux sont en contact et on peut ainsi obtenir une zone de réaction fine, continue et exempte de porosités. C'est ainsi que des procédés de surmoulage sous pression, tels que le forgeage liquide, peuvent être employés pour élaborer la pièce renforcée. Dans ces procédés, la température à l'interface alliage d'aluminium/insert à base de titane n'atteint pas des valeurs suffisamment élevées pendant assez longtemps pour permettre la création d'une liaison métallurgique sur toute l'interface lors du surmoulage. Cette liaison peut être obtenue par réaction chimique d'interface en phase solide lors d'un traitement thermique de durcissement structural de l'alliage d'aluminium effectué après le surmoulage.

Cette aptitude à supporter un traitement thermique de durcissement structural pour les pièces bimétalliques qui sont l'objet de l'invention, constitue une innovation majeure par rapport à ce qui est décrit dans l'art antérieur. En effet, avec un insert en métal ferreux ou cuivreux, lors d'un traitement thermique de durcissement structural de l'alliage d'aluminium, la liaison métallurgique se dégrade (renfort en alliage de fer) ou il se forme des brûlures de trempe (substrat à base de cuivre).

Ainsi, à l'issue du traitement thermique de durcissement structural de l'alliage de fonderie, la pièce bimétallique réalisée par surmoulage d'un alliage d'aluminium avec un insert massif en titane ou alliages de titane avec liaison métallurgique entre les deux métaux, possède les meilleures propriétés qu'il est possible d'obtenir avec chacun des matériaux dont elle est constituée.

A ce sujet, la liaison métallurgique est réalisée soit pendant le moulage, soit avant le moulage lors d'une opération préalable d'aluminiage, soit postérieurement au moulage lors du traitement thermique de durcissement structural de l'alliage de fonderie. En outre, plusieurs inserts en titane ou alliage de titane peuvent être placés dans une même pièce.

Conformément à l'invention, la pièce bimétallique associant un alliage d'aluminium de moulage et une partie massive d'insertion est caractérisée en ce que la partie massive d'insertion comprend au moins un insert en titane ou en alliage de titane et en ce qu'une liaison métallurgique continue présentant une résistance à la rupture d'au moins 150 MPa, telle que mesurée sur éprouvette de dissection, est réalisée à l'interface entre l'insert et l'alliage d'aluminium après un traitement thermique de durcissement structural de ce dernier.

L'invention sera mieux comprise et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue générale de l'implantation de la pièce métallique selon l'invention sur un train "4 barres" de suspension pour véhicule automobile,
- la figure 2 est une coupe dans le plan de l'insert de la pièce bimétallique de la figure 1,
- la figure 3 est une section partielle de l'insert,
- la figure 4 est une vue en écorchée de l'insert,
- la figure 5 est une vue d'ensemble du passage d'axe et du renfort de la pièce bimétallique des figures précédentes,
- la figure 6 montre la liaison entre un insert en alliage de titane TA6V et une pièce en AS7GO,3Sb, pièce brûte de fonderie (Y30),
- la figure 7 montre, à titre de comparaison, la liaison entre un insert en fonte et une pièce en AS7GO,3Sb, pièce traitée thermiquement (Y33), et
- la figure 8 montre la liaison obtenue selon l'invention entre un insert en alliage de titane TA6V, et une pièce en AS7GO,3Sb, pièce traitée thermiquement (Y33).

Les exemples suivants permettent de bien comprendre l'invention.

### Exemple 1

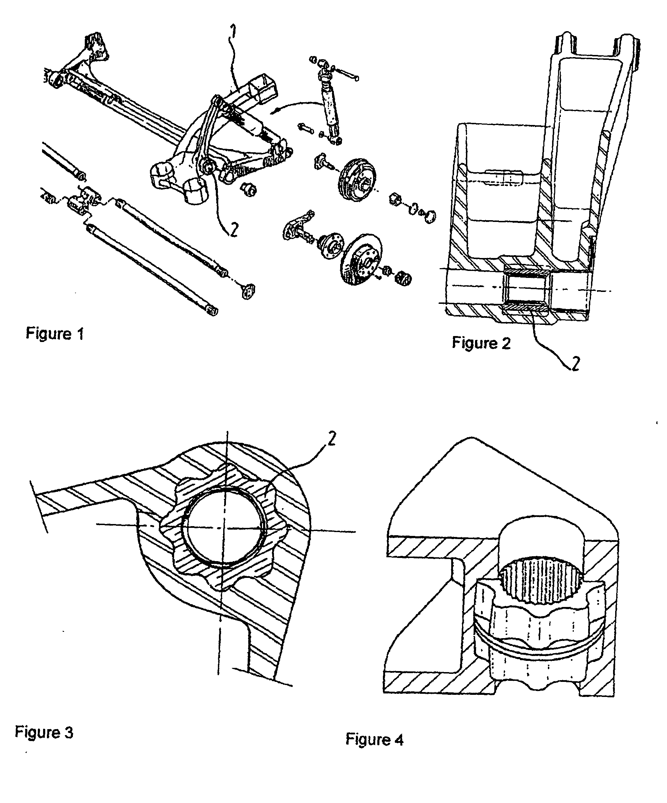

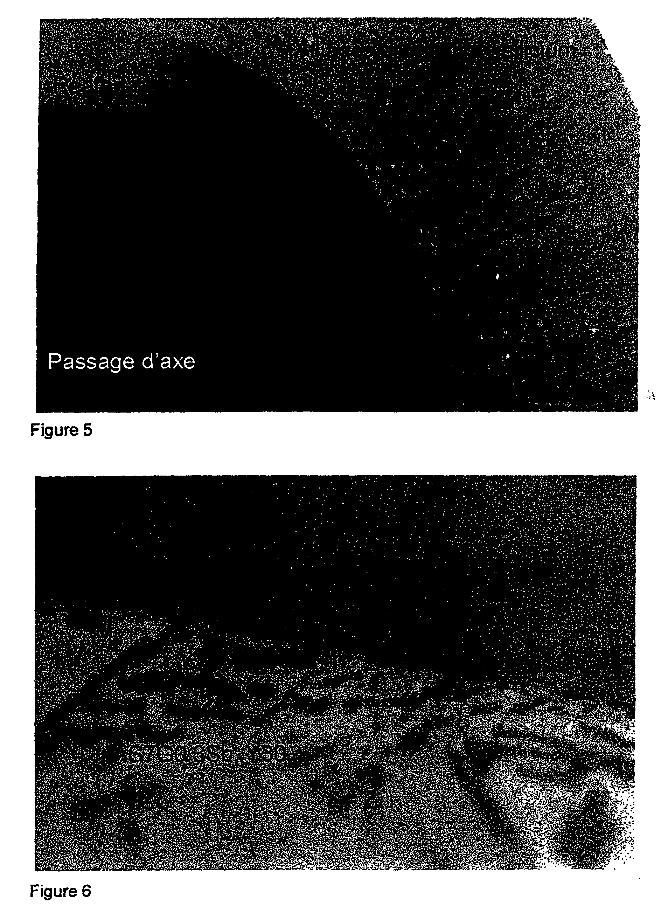

L'invention a été mise en oeuvre pour la réalisation d'un bras arrière de suspension pour véhicule automobile (voir les figures 1 et 2 où 1 désigne la pièce à réaliser) en alliages d'aluminium - silicium (AS10G, AS7GO,3Sb et AS7GO, 6Na ; pièce brute de fonderie et traitée thermiquement). Le passage d'axe soumis à de fortes contraintes mécaniques est renforcé par un insert massif 2 en alliage de titane (TA6V). On se reportera à cet effet aux figures 3 et 4 qui montrent la géométrie de l'insert 2 et du métal environnant du bras arrière de suspension des figures 1 et 2. Ce renfort est solidarisé avec la pièce par une liaison métallurgique, comme le montre les figures 5 et 6, créée selon le procédé Alfin : avant d'être placé dans le moule métallique, les substrats sont pré-aluminés par immersion (c'est-à-dire qu'ils subissent une opération préalable dite d'aluminiage) pendant 4 min dans un bain d'AS7G à 760°C.

Dans un but de comparaison, des pièces identiques avec un renfort en fonte GS52 ont été élaborées en utilisant exactement les mêmes conditions opératoires qu'avec les inserts en alliage de titane.

Un traitement thermique de durcissement structural de 10h à 527°C, suivi d'une trempe et d'un revenu à 160°C, a été effectué sur la moitié des pièces produites.

Les propriétés mécaniques obtenues par des essais mécaniques combinant contraintes de traction et de cisaillement sur la liaison métallurgique réalisée dans des pièces en AS7GO,3Sb localement renforcées élaborées dans des conditions identiques sont données dans le tableau 1.

**Tableau 1**

| | **Résistance en traction de la liaison métallurgique** | |
|---|---|---|
| | **Brutes de fonderie (Y30)** | **Traitées thermiquement (Y33)** |
| Renfort en fonte sans liaison métallurgique | 0 Mpa | 0 MPa |
| Renfort en fonte avec liaison métallurgique | 6,4 Mpa | 0,7 MPa |
| Renfort en **TA6V** avec liaison métallurgique | 44,6 Mpa | 61,0 MPa |

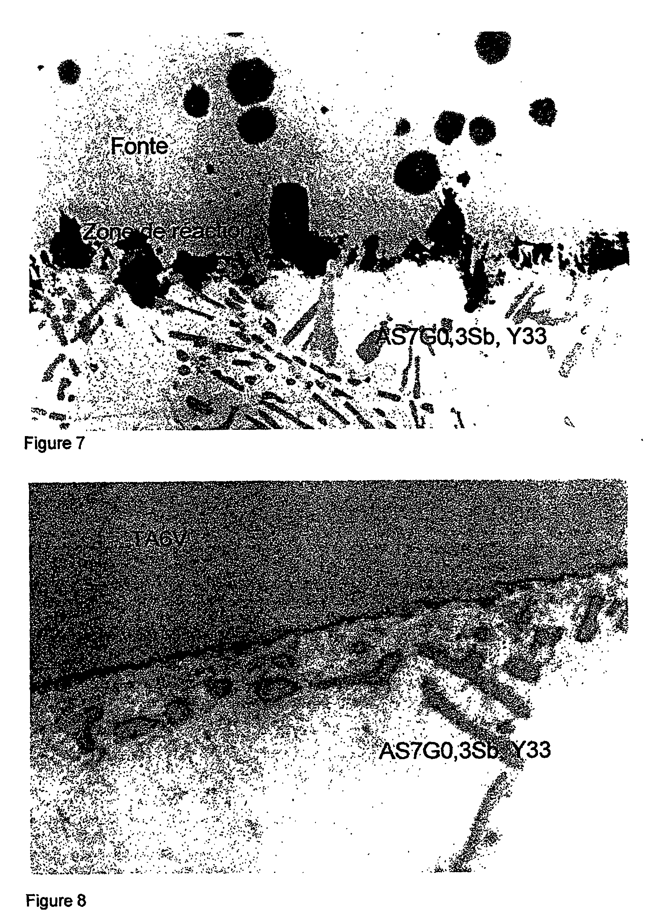

Comme le montrent bien ces données, d'une part la liaison fonte-alliage d'aluminium est toujours moins résistante que la liaison alliage de titane-alliage aluminium silicium et, d'autre part, cette dernière voit ses propriétés améliorées par un traitement thermique de durcissement structural de l'AS7GO,3Sb qui a été effectué dans les conditions indiquées ci-dessus. Les figures 6 et 8 montrent que la liaison métallurgique TA6V / AS7GO,3Sb n'évolue pas notablement lors d'un traitement thermique de l'alliage d'aluminium. Par comparaison, la figure 7 montre l'état de la liaison métallurgique créée avec la fonte, les pores qui se sont formés dans la zone de réaction lors du traitement thermique expliquent la baisse de ses propriétés. La résistance à la rupture de la pièce bimétallique selon l'invention mesurée sur éprouvette de dissection est de 150 Mpa avant traitement thermique de durcissement structural et passe à au moins 170 Mpa après les traitements de mise en solution, trempe et revenu appliqués sur l'alliage d'aluminium.

### Exemple 2

L'invention a été mise en oeuvre pour la réalisation d'un bridage mince en TA6V sur le passage d'arbre de transmission d'un boîtier différentiel de pont pour automobile en alliage AS7G0,3Sr. Dans ce cas, la taille de l'insert est suffisamment petite pour permettre une insertion directement à la coulée à 750°C de la pièce dans un moule en acier recouvert d'un revêtement réfractaire isolant et préchauffé à 450°C. L'observation métallographique de l'interface montre qu'une liaison métallurgique (avec la même apparence que celle présentée sur la figure 6) continue et homogène s'est développée sur toute la zone de contact entre les deux métaux. A l'issue des opérations de traitement thermique de durcissement structural (12h à 520°C) et de revenu (6h à 170°C), la zone de réaction à l'aspect de celle présentée sur la figure 8.

La même pièce avec un bridage mince en acier E24 décapé mécaniquement avec exactement les mêmes dimensions que celui en alliage de titane a été réalisée selon le même procédé et avec les mêmes conditions opératoires. Avec ce renfort en acier, l'observation métallographique de l'interface insert / alliage d'aluminium montre qu'en quelques points (qui représentent moins de 5% de la surface de contact entre les deux métaux) une zone de réaction s'est localement formée. Ce constat s'explique en tenant compte des différences de nature (Ti interagit significativement avec les gaz de son environnement et avec l'alumine) et de la conductivité thermique des alliages de titane et de fer. La quantité de chaleur absorbée à l'alliage d'aluminium par le TA6V est environ 4 fois moins importante que celle consommée par le renfort en acier E24. Ainsi lors de l'élaboration de la pièce bimétallique, la température atteinte par l'interface TA6V / AS7G0,3Sr sera très supérieure à celle de l'interface Acier / AS7G0,3Sr. Dans le premier cas, la liaison métallurgique s'est développée sur toute la surface de l'insert en contact avec l'alliage d'aluminium, alors qu'avec le renfort en acier E24 la zone de réaction représente moins de 5% de la surface de contact.

### Exemple 3

L'invention a été mise en oeuvre pour la réalisation par forgeage liquide (squeeze casting) d'une pièce en AS9U3G comportant un insert massif en TA5E. L'alliage d'aluminium est coulé à 750°C sur l'insert décapé mécaniquement et la contrainte appliquée lors du forgeage liquide est de l'ordre de 500 MPa pendant la solidification du métal liquide. A l'issue de la mise en forme de la pièce, les deux métaux se retrouvent en contact intime, mais il n'existe pas de liaison métallurgique entre eux (absence de zone de réaction 5 interfaciale). Le renfort en alliage de titane est défitivement solidarisé avec l'alliage d'aluminium, lors du traitement thermique de durcissement structural de l'AS9U3G qui a été effectué à 495°C pendant 18h. La liaison métallurgique ainsi créée a l'aspect de celle présentée sur la figure 8.

Dans le cas des modes de réalisation de l'invention selon les exemples 1 à 3 ci-dessus, la liaison métallurgique présente, avant les opérations de mise en solution, trempe et revenu appliquées sur l'alliage d'aluminium, une résistance à la rupture d'au moins 100 Mpa (mesurée sur éprouvette de dissection) et, après traitement thermique de durcissement structural de l'alliage d'aluminium, une résistance à la rupture d'au moins 150 Mpa, telle que mesurée sur éprouvette de dissection.

## Revendications

1. Pièce bimétallique associant un alliage d'aluminium de moulage et une partie massive d'insertion, **caractérisée en ce que** la partie massive d'insertion comprend au moins un insert (2) en titane ou en alliages de titane et **en ce que** l'interface entre l'insert et l'alliage d'aluminium est soumis à un traitement thermique de durcissement structural de sorte qu'une liaison métallurgique continue présentant une résistance à la rupture d'au moins 150 MPa, telle que mesurée sur éprouvette de dissection, est réalisée au niveau de cet interface.

2. Pièce selon la revendication 1, **caractérisée en ce que** le traitement thermique de durcissement structural de l'alliage d'aluminium est effectué entre 370 et 540°C pour des temps allant de 1 à 24h, typiquement de 4 à 12h, selon la nature de l'alliage d'aluminium, la taille de la pièce et les caractéristiques du four utilisé, ce traitement n'altérant pas les propriétés de la liaison métallurgique.

3. Pièce selon la revendication 1, **caractérisée en ce que** l'alliage de titane constituant l'insert appartient préférentiellement aux familles suivantes : TA6V, TA5E, TA8DV, Ti.10.2.3., TA6V6E.

4. Pièce selon la revendication 1, **caractérisée en ce que** l'alliage de surmoulage de l'insert appartient préférentiellement aux familles suivantes : AS, ASU, AG, AU, AZ, AM.

5. Pièce selon la revendication 1, **caractérisée en ce qu'**elle est réalisée par moulage par gravité, moulage sous pression ou par injection.

6. Pièce selon la revendication 1, **caractérisée en ce que** la liaison métallurgique est réalisée soit pendant le moulage, soit avant le moulage lors d'une opération préalable d'aluminiage, soit postérieurement au moulage lors du traitement thermique de durcissement structural de l'alliage de fonderie.

7. Pièce selon la revendication 1, **caractérisée en ce que** plusieurs inserts en titane ou alliage de titane sont placés dans une même pièce.

## Patentansprüche

1. Bimetallisches Werkstück aus einem Aluminium-Legierungsguss und einem massiven Einsatzteil, **dadurch gekennzeichnet, dass** der massive Einsatzteil wenigstens einen Einsatz (2) aus Titan oder Titanlegierungen enthält, und dass die Schnittfläche zwischen dem Einsatz und der Aluminium-Legierung einer Wärmebehandlung zur strukturellen Härtung unterworfen wird, so dass eine durchgehende metallurgische Verbindung, die eine Bruchfestigkeit von mindestens 150 MPa aufweist, gemessen am Sektionsprobestab, an dieser Schnittfläche erhalten wird.

2. Werkstück gemäss Anspruch 1, **dadurch gekennzeichnet, dass** die Wärmebehandlung zur strukturellen Härtung der Aluminium-Legierung zwischen 370 und 540°C während einer Dauer von 1 bis 24 Stunden, typischerweise von 4 bis 12 Stunden, in Anbetracht der Natur der Aluminium-Legierung, der Grösse des Werkstücks und der Kennzeichen des verwendeten Ofens durchgeführt wird, wobei diese Behandlung die Eigenschaften der metallurgischen Verbindung nicht ändert.

3. Werkstück gemäss Anspruch 1, **dadurch gekennzeichnet, dass** die Titanlegierung, aus der der Einsatz besteht, vorzugsweise zu folgenden Familien gehört : TA6V, TA5E, TA8DV, Ti.10.2.3., TA6V6E.

4. Werkstück gemäss Anspruch 1, **dadurch gekennzeichnet, dass** die Legierung des Abformens des Einsatzes vorzugsweise zu folgenden Familien gehört : AS, ASU, AG, AU, AZ, AM.

5. Werkstück gemäss Anspruch 1, **dadurch gekennzeichnet, dass** es mittels Schwerkraftsguss, Druckguss oder Spritzguss hergestellt wird.

6. Werkstück gemäss Anspruch 1, **dadurch gekennzeichnet, dass** die metallurgische Verbindung entweder während des Gusses, oder vor dem Guss während eines vorausgehenden Aluminiumbedampfungsvorgangs, oder nach dem Guss bei der Wärmebehandlung zur strukturellen Härtung des Legierungsgusses erstellt wird.

7. Werkstück gemäss Anspruch 1, **dadurch gekennzeichnet, dass** mehrere Einsätze aus Titan oder Titanlegierung in dasselbe Werkstück eingelegt werden.

## Claims

1. Bimetallic component that associates a moulding aluminium alloy and a bulk insertion part, **characterized in that** the bulk insertion part comprises at least one insert (2) of titanium or titanium alloy, and **in that** the interface between the insert and the aluminium alloy is subjected to a structural hardening heat treatment whereby a continuous metallurgical bound having a rupture strength of at least 150 MPa, as measured on a dissection test piece, is made at this interface.

2. Component according to claim 1, **characterized in that** the structural hardening heat treatment of the aluminium alloy is made between 370 and 540°C for times from 1 to 24h, typically from 4 to 12h, according to the nature of the aluminium alloy, the size of the component and the characteristics of the oven which is used, this treatment causing no deterioration on the properties of the metallurgical bound.

3. Component according to claim 1, **characterized in that** the titanium alloy that forms the insert belongs preferentially to the following families : TA6V, TA5E, TA8DV, Ti.10.2.3., TA6V6E.

4. Component according to claim 1, **characterized in that** the insert overmoulding alloy belongs preferentially to the following families : AS, ASU, AG, AU, AZ, AM.

5. Component according to claim 1, **characterized in that** it is made by gravity moulding, pressure or injection moulding.

6. Component according to claim 1, **characterized in that** the metallurgical bounding is made either during moulding or before moulding upon a preliminary aluminizing,or still subsequently to moulding upon the structural hardening heat treatment of the casting alloy.

7. Component according to claim 1, **characterized in that** a plurality of inserts of titanium or titanium alloy are positioned in a same component.
